**Europäisches Patentamt**

**European Patent Office**

**Office européen des brevets**

(19)

(11) Publication number : **0 414 984 B1**

(12) ## EUROPEAN PATENT SPECIFICATION

(45) Date of publication of patent specification :
29.09.93 Bulletin 93/39

(51) Int. Cl.⁵ : **B60G 17/01,** F15B 1/02

(21) Application number : **90100240.2**

(22) Date of filing : **05.01.90**

(54) **Active suspension system with enhanced response characteristics hydraulic circuit.**

(30) Priority : **31.08.89 JP 225578/89**

(43) Date of publication of application :
**06.03.91 Bulletin 91/10**

(45) Publication of the grant of the patent :
**29.09.93 Bulletin 93/39**

(84) Designated Contracting States :
**DE GB**

(56) References cited :
EP-A- 0 318 721
EP-A- 0 318 932
DE-A- 2 946 765
JP-A- 1 249 509
US-A- 2 618 121
US-A- 4 838 306
MACHINE DESIGN. vol. 35, no. 3, 31 January 1963, CLEVELAND US pages 107 - 110;
M.E.Long: "Hydraulic Accumulators"
MACHINE DESIGN. vol. 46, no. 22, 12 September 1974, CLEVELAND US pages 28 - 34;
"Accumulators and Intensifiers"

(73) Proprietor : **NISSAN MOTOR CO., LTD.**
2 Takara-cho, Kanagawa-ku
Yokohama-shi Kanagawa-ken 221 (JP)

(72) Inventor : **Akatsu, Yohsuke**
10-32-202, Hiyoshihon-cho 4-chome,
Kohoku-ku
Yokohama-shi, Kanagawa-ken (JP)
Inventor : **Fukushima, Naoto**
17-15, Ogigayatsu 2-chome
Kamakura-shi, Kanagawa-ken (JP)
Inventor : **Fukunaga, Yukio**
B-504, 8, Ikego 3-chome
Zushi-shi, Kanagawa-ken (JP)
Inventor : **Fujimura, Itaru**
Koyamaso 2-2, 220, Yatsu-machi,
Kanazawa-ku
Yokohama-shi, Kanagawa-ken (JP)
Inventor : **Satoh, Masaharu**
802-24, Higashikoiso, Oiso-cho
Naga-gun, Kanagawa-ken (JP)
Inventor : **Fukuyama, Kensuke**
Nissan Uragoryo, 68, Oppamahigashi-cho
3-chome
Yokosuka-shi, Kanagawa-ken (JP)
Inventor : **Takahashi, Kenro**
4-106, 13, Tsurugaoka 2-chome
Yokosuka-shi, Kanagawa-ken (JP)
Inventor : **Tsukamoto, Masahiro**
68, Oppamahigashi-cho 3-chome
Yokosuka-shi, Kanagawa-ken (JP)

(74) Representative : **Patentanwälte TER MEER - MÜLLER - STEINMEISTER & PARTNER**
Mauerkircherstrasse 45
D-81679 München (DE)

## Description

U. S. Patent **4,702,490,** issued on October 27, 1987 which has been assigned to the common owner to the present invention, discloses one of typical construction of an actively controlled suspension system, in which a hydraulic cylinder defining a working chamber is disposed between a vehicular body and a suspension member rotatably supporting a vehicular wheel. The working chamber of the hydraulic cylinder is communicated with a hydraulic circuit including a pressurized working fluid source. A pressure control valve, such as an proportioning valve assembly, is disposed in the hydraulic circuit, which is connected to an electric or electronic control circuit to be controlled the valve position. The pressure control valve is controlled the valve position by a suspension control signal produced in the control circuit for adjusting pressure in the working chamber and whereby controlling suspension characteristics.

On the other hand, European Patents **0 283 004, 0 285 153** and **0 284 053** discloses technologies for controlling the suspension systems constructed as set forth above, depending upon the vehicle driving condition for suppressing rolling and/or pitching of the vehicular body.

In one of the typical construction of the hydraulic circuit includes a pressure source unit which comprises a fluid pump drivingly associated with an automotive internal combustion engine so as to be driven by the engine output torque. The fluid pump is generally rated to produce rated pressure which is selected in view of the required line pressure in a supply line for supplying the pressurized fluid to the working chamber, at the minimum revolution speed of the engine so that the working fluid pressure to be supplied to the working chamber of the hydraulic cylinder can be satisfactorily high at any engine driving range. As will be appreciated, the output pressure of the fluid pump increases according increasing of the engine revolution speed. Therefore, at high engine revolution speed range, excessive pressure in excess of a predetermined maximum line pressure is relieved via a relief valve. Therefore, the engine output can be wasted to degrade engine driving performance as a power plant for the automotive vehicle and thus degrade fuel economy.

On the other hand, in the practical operation of the active suspension system, the fluid pressure in the working chamber in the hydraulic cylinder can be maintained at constant value for maintaining a desired vehicular height, at substantially low vehicle speed range or while the vehicle is not running. Despite this fact, the prior proposed hydraulic circuits for the actively controlled suspension systems supply the rated pressure of the fluid pump which should be higher than a minimum line pressure required for adjustment of the fluid pressure in the working chamber.

In order to maintain the rated pressure to be output from the fluid pump, substantial engine output will be consumed even at the low vehicle speed range, in which the line pressure is not required for no possibility of adjustment of the suspension characteristics.

Improvement in the hydraulic circuit for the prior proposed active suspension system has been proposed in the co-pending U. S. Patent Application Serial No. **331,602,** filed on March 31, 1989, which application has been commonly assigned to the common assignee to the present invention. The corresponding invention to the above-identified co-pending U. S. Patent Application has been published as Japanese Patent First (unexamined) Publication (Tokkai) Heisei **1-249509,** published on October 4, 1989. The prior invention has been directed to a hydraulic circuit for an actively controlled suspension system which employs first and second pressure relief valves disposed in a hydraulic pressure source circuit for relieving excessive pressure. The second pressure relief valve is provided a lower relief pressure than that of the first pressure relief valve. Means for selectively connecting and disconnecting the second pressure relief valve is disposed in the hydraulic pressure source circuit at an orientation upstream of the second pressure relief valve. The means is positioned at shut-off position to disconnect the second pressure relief valve when a vehicle traveling speed is higher than a predetermined speed. The means is responsive to the vehicle speed lower than the predetermined speed for establishing connection between a pressurized fluid source to the second relief valve for relieving the pressure at lower level than that established when the vehicle speed is higher than the predetermined speed.

Furthermore, the prior proposed invention includes a pilot pressure operated operational one-way check valve in a drain line for regulating line pressure to be supplied to a pressure control valve which adjusts fluid pressure in a working chamber in a hydraulic cylinder disposed between a vehicle body and a suspension member rotatably supporting a road wheel, by draining excessive line pressure. Similar hydraulic circuit constructions have also been disclosed in European Patent First Publications Nos. **0 318 721, 0 318 932,** for example.

Such prior proposed hydraulic circuit does provide improved characteristics for the active suspension system in certain aspect. However, the prior proposed system still encounters a drawback in response characteristics of the pressure control valve unit by the presence of back pressure due to flow resistance in the drain line.

## SUMMARY OF THE INVENTION

Therefore, it is an object of the present invention to provide a hydraulic circuit for an active suspension system, which can successfully absorb the back pressure and thus can avoid influence of the back pressure for the response characteristics of a pressure control valve.

To comply with this object, the suspension system according to the in- vention is characterized by the features of the characterizing part of claim 1.

The invention employs a back pressure absorbing means provided between the pressure control means and the check valve means to absorb the back pressure generated by flow resistance in the drain line.

Preferably, the active suspension system further comprises check valve means for disposed in the drain line and connected to the supply line for establishing fluid communication through the drain line when a line pressure in the supply line is held higher than or equal to a set pressure.

On the other hand, the back pressure absorbing means may be provided between the pressure control valve means and the check valve means. The back pressure absorbing means may comprise a pressure accumulator.

In the preferred construction, the check valve means comprises a pilot pressure operated operational one-way check valve, which has a pilot chamber to which the line pressure in the supply line is introduced for selectively establishing and blocking fluid communication through the drain line. In such case, the operational one-way check valve may define an inlet port connected to the pressure control valve via a first section of the drain line and an outlet port connected to a fluid reservoir in the pressure source, the operational one-way check valve further defining a communication path means for selectively establishing and blocking fluid communication between the pilot chamber and the inlet port. The operational one-way check valve may also include a valve member movable between a first position for establishing fluid communication between the inlet and outlet ports of the check valve and a second position for blocking fluid communication between the inlet and outlet ports of the check valve, and the fluid communication path means establishes fluid communication between the pilot chamber and the inlet port when the valve member is in the second position and blocks fluid communication between the pilot chamber and the inlet port when the valve member is in the first position.

In the further preferred construction, the active suspension system may further comprise a control unit associated with at least one sensor for monitoring preselected vehicle driving parameter, the control unit deriving a control signal for the pressure control valve means for operating the latter in a magnitude corresponding thereto, the control unit maintains operation for a given period of time after shutting down of main power supply.

## BRIEF DESCRIPTION OF THE DRAWINGS

The present invention will be understood from the detailed description given herebelow and from the accompanying drawings of the preferred embodiments of the invention, which, however. should not be taken for limiting the invention to the specific embodiments, but are for explanation and understanding only.

In the drawings:

Fig. 1 is a diagrammatical illustration of the overall construction of the preferred embodiment of an active suspension system, according to the present invention, in which the preferred embodiment of a proportioning valve assembly is employed as a pressure control valve;

Fig. 2 is a sectional view of the preferred embodiment of the pressure control valve according to the present invention;

Fig. 3 is a circuit diagram of one example of hydraulic circuit which is applicable for the active suspension system according to the present invention;

Fig. 4 is a chart showing relationship between an electric current value of a control signal to be supplied for an actuator of the pressure control valve and a working fluid pressure supplied to a working chamber of a hydraulic cylinder; and

Fig. 5 is a sectional view of an operational one-way check valve employed in the preferred embodiment of the hydraulic circuit of the active suspension system of the invention;

Fig. 6 is a chart showing influence of back pressure in a drain line for variation of fluid pressure in a working chamber of a hydraulic cylinder in the preferred embodiment of the active suspension system;

Fig. 7 is a section of a modified embodiment of the pressure control valve unit to be employed in the preferred embodiment of the active suspension system of Fig. 1;

Fig. 8 is a circuit diagram of a modified hydraulic circuit in the active suspension system;

Figs. 9 and 10 are section showing modifications of the pilot operated operational one-way check valve to be employed in the active suspension system of the invention;

Fig. 11 is a timing chart showing preferred process of operation of the preferred embodiment of the active suspension system in response to OFF-set of power supply; and

Figs. 12 through 16 are sections respectively showing modified constructions of the operational one-way check valve to be employed in the active suspension system of the invention.

## DESCRIPTION OF THE PREFERRED EMBODIMENT

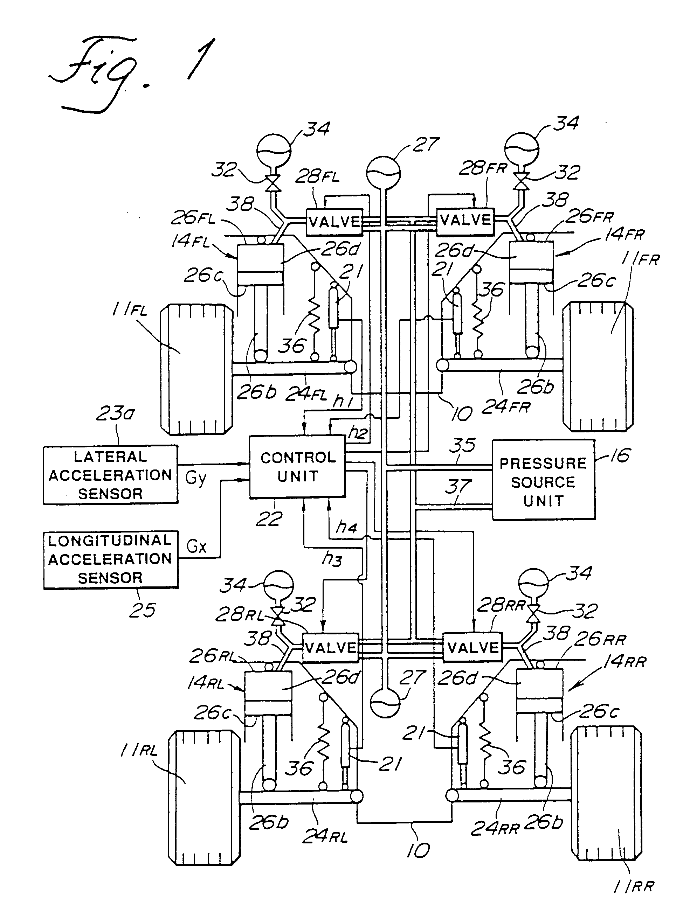

Referring now to the drawings, particularly to **Fig. 1**, the preferred embodiment of an active suspension system, according to the present invention, is designed to generally perform suspension control for regulating vehicular height level and vehicular attitude by suppressing relative displacement between a vehicular body **10** and suspension members **24FL, 24FR, 24RL** and **24RR** provided in front-left, front-right, rear-left and rear-right suspension mechanism **14FL, 14FR, 14RL** and **14RR** and rotatably supporting front-left, front-right. rear-left and rear-right wheels **11FL, 11FR, 11RL** and **11RR**. The suspension member will be hereafter represented by the reference numeral "**24**" as generally referred to. Similarly, the suspension mechanism as generally referred to will be hereafter represented by the reference numeral "**14**" Respective front-left, front-right, rear-left and rear-right suspension mechanisms **14FL, 14FR, 14RL** and **14RR** have hydraulic cylinders **26FL, 26FR, 26RL** and **26RR** which will be represented by the reference numeral "**26**" as generally referred to.

Each of the hydraulic cylinder **26** is disposed between the vehicular body **10** and the suspension member **24** to produce a damping force for suppressing relative displacement between the vehicular body and the suspension member. The hydraulic cylinder **26** generally comprises an essentially enclosed cylindrical cylinder body **26a** defining therein an enclosed chamber. A thrusting piston **26c** is thrustingly and slidably disposed within the enclosed chamber of the hydraulic cylinder **26** for defining in the latter a working chamber **26d** and a reference pressure chamber **26e**. The working chamber **26d** may be communicated with the reference pressure chamber **26e** via an orifice formed through the piston for fluid communication therebetween in an substantially restricted amount. The piston **26c** is connected to the associated one of suspension member **24** via a piston rod **26b**. A suspension coil spring **36** employed in the shown type of the suspension system is not required a resilient force in a magnitude required in the ordinary suspension system and only required the resilient force necessary for maintaining the vehicular body about the suspension member.

The working chamber **26d** of the hydraulic cylinder **26** is connected one of pressure control valves **28FL, 28FR, 28RL** and **28RR** via a pressure control line **38**. The pressure control valve **28FL, 28FR, 28RL** and **28RR** will be hereafter represented by the reference numeral "**28**" as generally referred to. The pressure control valve **28** is, in turn, connected to a pressure source unit **16** via a supply line **35** and a drain line **37**. A branch circuit is provided for connecting the pressure control line **38** to a pressure accumulator **34** via a flow restricting means, such as an orifice **32**. Another pressure accumulator **18** is provided in the supply line **35** for accumulating the excessive pressure generated in the pressure source unit **16**.

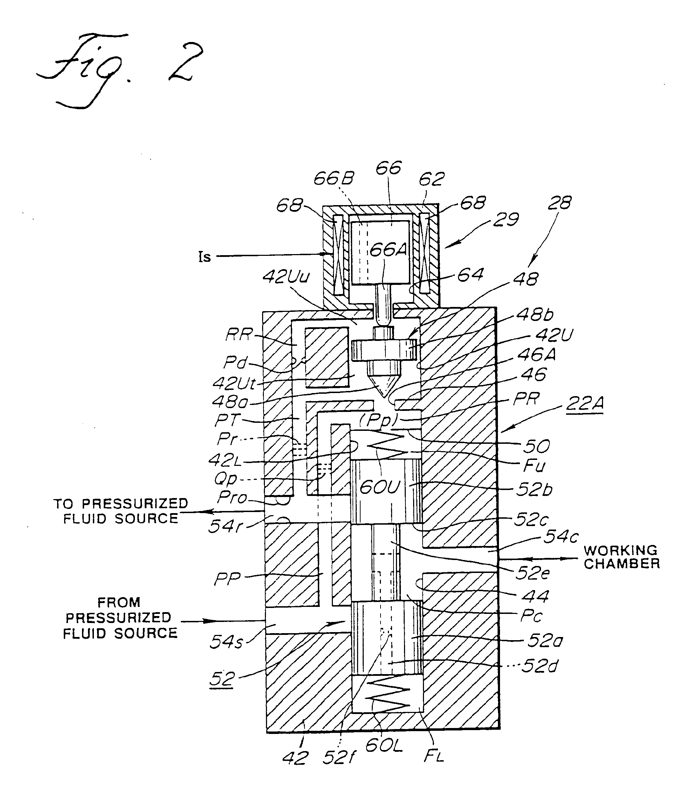

The pressure control valves **28** comprise, though it is not clearly shown in **Fig. 1**, electrically or electromagnetically operable actuators (reference is made to **Fig. 2**), such as a proportioning solenoids. The actuators are connected to a microprocessor based control unit **22**. The control unit **22** is connected a plurality of vehicular height sensors **21** which are disposed in respectively associated suspension mechanism and designed for monitoring relative position of the vehicular body **10** and the relevant suspension member **24** to produce a vehicular height level indicative signals $h_1, h_2, h_3$ and $h_4$. The control unit **22** is also connected to a lateral acceleration sensor **23**, a longitudinal acceleration sensor **25** and so forth to receive the vehicle driving condition indicative parameters. Based on these control parameters, including the height level indicative signals, a lateral acceleration indicative signal $G_y$ generated by the lateral acceleration sensor, a longitudinal acceleration indicative signal $G_x$ generated by the longitudinal acceleration sensor, and so forth, the control unit performs anti-rolling, anti-pitching and bouncing suppressive suspension controls.

While the specific sensors, such as the vehicle height sensors which comprise strike sensor, the lateral acceleration sensor **23** and the longitudinal acceleration sensor **25**, it is possible to replace or add any other sensors which monitors vehicle driving parameter associated with the suspension control. For instance, the stroke sensors employed in the shown embodiment can be replaced with one or more vertical acceleration sensors. Similarly, the lateral acceleration sensor may be replaced with a steering angle sensor for monitoring steering behaviour for assuming lateral force to be exerted on the vehicular body. In the later case, the parameter indicative of the steering angular displacement may be used in combination of a vehicular speed data since vehicular speed may influence for rolling magnitude of the vehicle during steering operation..

As shown in **Fig. 2** in detail, the pressure control valve **28** comprises a proportioning valve assembly and is designed to be controlled by an electric current as a control signal supplied from the control unit **22** for varying valve position according to variation of the current value of the control signal. Generally, the pressure control valve **28** controls magnitude of introduction and draining of pressurized fluid into and from the working chamber **26d** for adjusting the pressure in the working chamber. As will be appreciated, since the adjusted fluid pressure in the working fluid determines damping force to be created in response to relative displacement between the vehicle body **10** and the suspension member **24**. Mode of the suspension mechanism is varied according to variation of the fluid pressure in the working chamber between a predetermined hardest mode to most soft mode.

In the construction of the pressure control valve shown in **Fig. 2**, the pressure control valve **28** includes a valve housing **42**. The valve housing **42** defines a valve bore **44** which is separated in to a valve chamber **42L** and a control chamber **42U** by means of a partitioning wall **46**. The partitioning wall **46** is formed with a communication path opening **46A** for communication between the control chamber **42U** and the valve chamber **42L**. As seen from **Fig. 2**, the control chamber **42U** and the valve chamber **42L** are arranged in alignment to each other across the communication path opening **46A**. In parallel to a section of the partitioning wall **46** extending perpendicular to the axis of the valve chamber **42L** and the control chamber **42U**, a fixed orifice defining partitioning member **50** is provided. The partitioning member **50** defines a throttling orifice which is oriented substantially in alignment with the communication path opening **46A**. The partitioning wall **46** and the partitioning member **50** are cooperative for defining a pilot chamber **PR** therebetween.

A valve spool **52** is thrustingly and slidingly disposed within the valve chamber **42L**. The valve spool **52** defines an upper feedback chamber **FU** between the tip end thereof and the partitioning member **50**. The valve spool **52** also defines a lower feedback chamber **FL** between the other tip end thereof and the bottom of the valve chamber **42L**. Offset springs **60U** and **60L** are disposed within the upper and lower feedback chambers **FU** and **FL**, which offset springs exerts spring force to the valve spool **52** for resiliently restricting movement of the latter. Resilient force of the offset springs **60U** and **60L** are so set as to balance to place the valve spool **52** at a neutral position, when the fluid pressure in the upper and flow feedback chambers **FU** and **FL** balances to each other. The valve chamber **42L** is communicated with a supply line **35** via an supply port **54s**, a drain line **37** via a drain port **54r** and a pressure control line **38** via a control port **54c**, which supply port, drain port and control port are defined in the valve housing **42**. The valve spool **52** at the aforementioned neutral position, blocks fluid communication of the pressure control chamber **PC** with any of the supply port **54s** and the drain port **54r**. As a result, as long as the valve spool **52** is maintained at the neutral position, overall fluid force in the hydraulic circuit downstream of the pressure control valve, which circuit includes the working chamber **26d** of the hydraulic cylinder **26** is held constant.

The valve spool **52** is formed with lands **52a** and **52b** connected to each other via smaller diameter bar-like section **52e**. The land **52a** is oriented adjacent the lower feedback chamber **FL** so as to subject the tip end to the fluid pressure in the lower feedback chamber. Similarly, the land **52b** is oriented adjacent the upper feedback chamber **FU** so as to subject the tip end to the fluid pressure in the upper feedback chamber. The bar-like section **52e** between the lands **52a** and **52b** is cooperative with the peripheral wall of the valve chamber **42L** in order to define therebetween a pressure control chamber **PC**. A fluid flow path **52d** is formed through the valve spool **52**. The fluid flow path **52d** has one end communicated with the pressure control chamber **PC** and the other end communicated with the lower feedback chamber **FL**. A fixed flow restricting orifice **52f** is formed in the fluid flow path **52d** for restricting fluid flow therethrough.

A poppet valve member **48** is disposed within the control chamber **42U** for thrusting movement therein. The poppet valve member **48** has a valve head **48a** of an essentially conical configuration. The valve head **48a** opposes to the communication path opening **46A** of the partitioning wall **46**. The poppet valve member **48** is operably associated with a proportioning solenoid assembly **29** as the actuator. The proportioning solenoid assembly **29** comprises a housing **62** rigidly secured on the valve housing **42** and defining an internal space to receive therein a plunger **66**. The plunger **66** has a plunger rod **66A**. The tip end of the plunger rod **66A** is kept in contact with the tip end of the poppet valve member **48** remote from the valve head **48a**. Therefore, the poppet valve member **48** is axially driven by means of the plunger **66** to control the path area in the communication path opening **46A** according to the position of the tip end of the plunger rod **66A**. Adjusting of the path area in the communication path opening **46A** results in variation of fluid pressure to be introduced into the pilot chamber **PR**.

In order to control the position of the plunger **66** with the plunger rod **66A**, a proportioning solenoid coil **68** is housed within the housing **62** and surrounds the plunger **66**. The interior space of the housing **62** is connected to the control chamber **42U** for fluid communication therebetween. The plunger **66** is formed with a fluid path **66B** for fluid communication between upper and lower sections of the interior space. Therefore, the fluid pressure in the upper and lower sections of the interior space of the housing **62** is held equal to the pressure in the control chamber **42U**. This cancels fluid pressure to be exerted on the poppet valve and the plunger so that the position of the tip end of the plunger rod **66A** can be determined solely depending upon the magnitude of energization of the proportioning solenoid coil **68**.

As seen from **Fig. 2**, the poppet valve member **48** has a cylindrical larger diameter section **48b** for separating the control chamber **42U** into upper section and lower section **42Uu** and **42Ul**. The upper and lower sections **42Uu** and **42Ul** are communicated with the drain port **54r** via a pilot return path **PT**. A multi-stage orifice **Pr** is provided in the pilot return path **PT** for restricting fluid flow therethrough. The multi-stage orifice **Pr** comprises a plurality of strips formed with through openings and is so designed that one of the orifice oriented at most upstream side is mainly effective for restricting fluid flow when fluid flowing therethrough is steady flow and that all of the orifices of respective strips are equally effective for restricting fluid flow when fluid flow therethrough is disturbed and not steady. Therefore, as will be appreciated herefrom, the multi-stage orifice **Pr** employed in the shown embodiment serves to provide greater fluid flow restriction against non-steady or disturbed fluid flow than that for the steady flow. As seen from **Fig. 2**, the multi-stage orifice **Pr** is provided upstream of the upper and lower sections **42Uu** and **42UI**. On the other hand, a fixed throttling orifice **Pd** is provided at an orientation downstream of the lower section **42UI** and upstream of the upper section **42Uu**. Similarly, the pilot chamber **PR** is communicated with the supply port **54s** via a pilot path **PP**. A multi-stage orifice **Qp** which has similar construction and flow restricting function to that of the multi-stage orifice **Pr** is provided in the pilot path **PP**.

A fixed throttle orifice **Pro** is also provided in the drain port **54r** for restricting fluid flow therethrough. The diameter of the fluid path at the orifice **Pro** is so selected as to create great flow restriction against pulsatile fluid flow cyclically varying the fluid pressure at a frequency approximately 1 Hz.

As can be seen from **Fig. 2**, the pressure control valve **28** is so arranged as to direct the axis of the valve bore **44** parallel to the longitudinal axis of the vehicle body. The longitudinal acceleration to be exerted on the vehicular body is much smaller than the lateral acceleration and vertical acceleration exerted on the vehicle body. Therefore, by arranging the pressure control valve **28** so that the poppet valve **48** and the valve spool **52** thrustingly move in longitudinal direction, influence of the externally applied acceleration can be minimized.

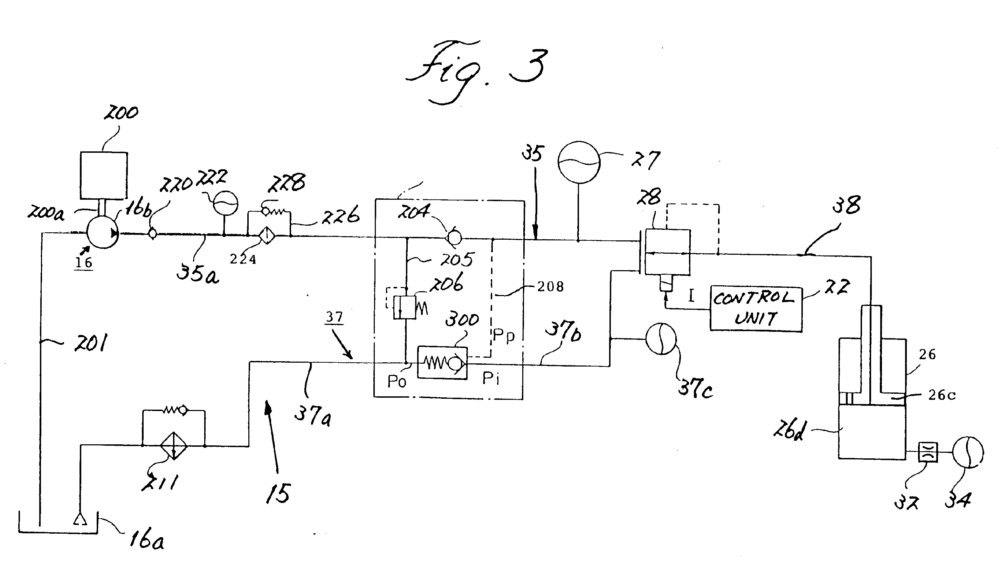

**Fig. 3** shows detailed circuit construction of one example of hydraulic circuit which is applicable for the shown embodiment of the active suspension system, according to the present invention. The hydraulic circuit includes a fluid pressure source circuit **15** which includes the pressure source unit **16**. The pressure source unit **16** includes the pressure unit **16b** which comprises a fluid pump, and is connected to a fluid reservoir **16a** via a suction pipe **201** The fluid pump **16b** is associated with an automotive engine **200** so as to be driven by the output torque of the latter output from an engine output shaft **200a**. The outlet of the pressure unit **16b**, through which the pressurized working fluid is discharged, is connected to the supply port **54s** of the pressure control valve **28** via the supply line **35**. An one-way check valve **220**, a pressure accumulator **222** for absorbing pulsatile, a filter **224** are disposed in a portion **35a** of the supply line **35**. A by-pass passage **226** with an one-way check valve **228** is provided for by-passing the filter **224**.

A pressure accumulators **27** are also connected to the supply line **35** to receive therefrom the pressurized fluid for accumulating the pressure. An one-way check valve **204** is disposed in the supply line **35** at the position upstream of the junction between the pressure accumulators **27** and the supply line **35**.

A pressure relief line **205** is also connected to the supply line **35** at the position intermediate between the filter **224** and the one-way check valve **204**, at one end. The other end of the pressure relief line **205** is connected to the drain line **37**. A pressure relief valve **206** is disposed in the pressure relief line **205**. The pressure relief valve **206** is responsive to the fluid pressure in the supply line **35** higher than a set pressure to drain the excessive pressure to the drain line for maintaining the pressure in the supply line **35** below the given first line pressure level.

On the other hand, an operational one-way check valve **300** is disposed between the sections **37a** and **37b** of the drain line **37**. The operational one-way check valve **300** is also connected to the supply line **35** at downstream of the one-way check valve **204** to receive therefrom the pressure in the supply line as a pilot pressure, via a pilot line **208**. The operational one-way check valve **300** is designed to be maintained at open position as long as pilot pressure introduced from the supply line **35** at the orientation downstream of the one-way check valve **204** is held higher than a predetermined pressure. At the open position, the operational one-way check valve maintains fluid communication between the inlet side and outlet side thereof so that the working fluid in the drain line **37** may flow therethrough to the reservoir tank **16a**. On the other hand, the operational one-way check valve **300** is responsive to the working fluid pressure in the supply line downstream of the one-way check valve **204** serving as the pilot pressure dropping below the predetermined pressure level to be switched into shut-off position. At the shut-off position, the operational one-way check valve **300** blocks fluid communication between the drain port **54r** of the pressure control valve **28** and the reservoir tank **16a**. In the shown embodiment, the predetermined pressure is set at a pressure corresponding to the neutral pressure of the pressure control valve unit **28**.

For the section **37b** of the drain line **37**, a pressure accumulator **37c** is provided. The pressure accumulator **37c** is arranged for absorbing back pressure to be generated by flow resistance in the drain line **37**.

An oil cooler **211** is disposed in the drain line **37** for cooling the working fluid returning to the reservoir tank **16a**.

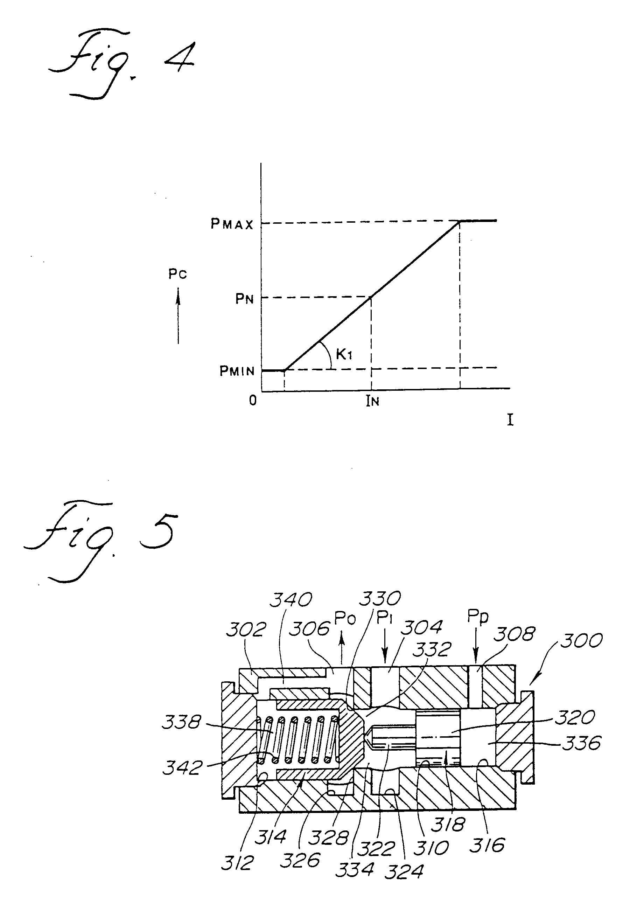

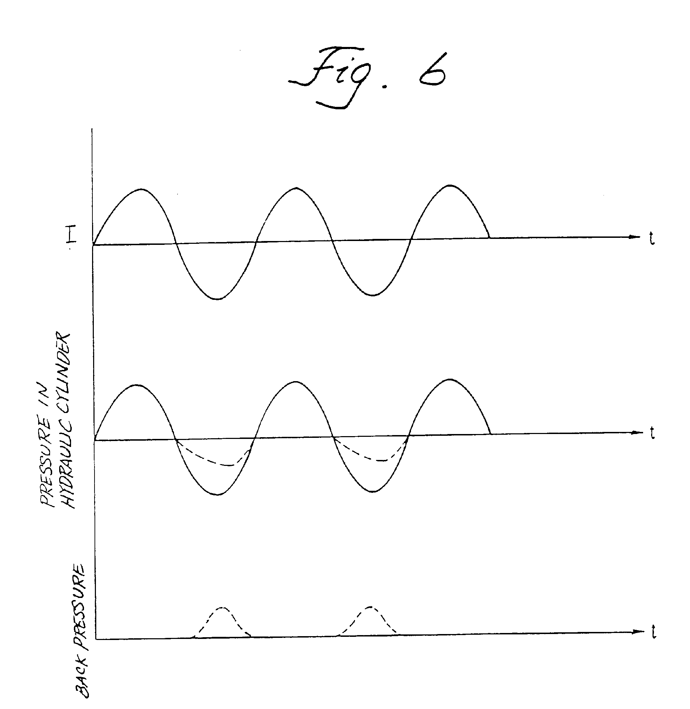

**Fig. 5** shows the detailed construction of the preferred embodiment of the operational one-way check valve **300** to be employed in the preferred embodiment of the active suspension system according to the present invention. As shown in **Fig. 5**, the operational one-way check valve **300** comprises a valve housing **302** formed with an inlet port **304**, an outlet port **306** and a pilot port **308**. The valve housing **302** defines a valve bore **310**. The valve bore **310** comprises a larger diameter section **312**, in which a poppet valve **314** is thrustingly disposed, and a smaller diameter section **316**, in which a valve spool **318** is disposed. The pilot port **308** is communicated with the supply line **35** at the section **35a** disposed between the one-way check valve **204** and the pressure control valve unit **28FL 28FR, 28RL** and **28RR**, via the pilot line **300a**. The pilot port **308** is, on the other hand, communicated with the smaller diameter section **316** to supply the line pressure of the supply line **35** at the orientation downstream of the one-way check valve **204** as the pilot pressure **Pp**. On the other hand, the inlet port **304** is communicated with the drain port **54r** of the pressure control valve unit **28** via a section **37b** of the drain line **37**. The inlet port **304** communicates with the smaller diameter section **316** via an annular groove **324** formed on the inner periphery of the valve housing **302**. The outlet port **306** is communicated with the fluid reservoir **16a** via a section **37a** of the drain line **37** and, in turn, communicated with the larger diameter section **312** via an annular groove **326** formed on the inner periphery of the valve housing **302**. As seen from **Fig. 5**, the annular grooves **324** and **326** are oriented in side-by-side relationship with leaving a radially and inwardly projecting land **328**. The land **328** has a shoulder **330**.

The valve spool **318** and the poppet valve **314** are cooperated with each other to define therebetween a control chamber **334** which communicates with the inlet port **304** and the outlet port **306**. On the other hand, the valve spool **318** also defines a pilot chamber **336** at a side remote from the control chamber **334**. The poppet valve **314** defines a pressure setting chamber **338** at a side remote from the control chamber **334**. The pressure setting chamber **338** is communicated with the outlet port **306** via a path **340**. A set spring **342** is disposed within the pressure setting chamber **338** for normally exerting a spring force to the poppet valve **314**. In the preferred embodiment, the set spring **342** is provided a set force which corresponds the neutral pressure $P_N$ of the pressure control valve unit **28**.

The valve spool **318** has a valve body **320** and a valve stem **322** projecting from the valve body toward the poppet valve **314**. The tip end of the valve stem **322** contacts with the mating surface of the poppet valve **314**. The poppet valve **314** has an annular shoulder **332** mating with the shoulder of the land **330**.

With the construction set forth above, the operational one-way check valve **300** operates as both of the pressure relief valve for relieving the excessive pressure in the drain line and one-way check valve.

The relief pressure of the poppet valve **314** can be illustrated by the following balancing equation:

$$F_0 = P_{p0} \times A$$

where

$F_0$ is the set pressure of the set spring **342**;

A is an effective area of the spool; and

$P_{p0}$ is a relief pressure.

Here, assuming that the pressure **Pi** at the inlet port **304** is greater than or equal to the pilot pressure **Pp** at the pilot chamber **336**, the valve spool **318** is shifted away from the poppet valve **314** so that the pilot pressure **Pp** in the pilot chamber **336** is not active on the valve position of the poppet valve. In such case, the poppet valve **314** operates purely as the pressure relief valve for relieving excessive pressure. At this time, the force balance as illustrated by:

$$Pi \times A = P_{p0} \times A$$

can be established/ Therefore, as long as the fluid pressure at the inlet port **304** is higher than the relief pressure $P_{p0}$, the shoulder **332** of the poppet valve **314** is held away from the shoulder **330** of the land **328** so as to permit fluid flow through the outlet port **306** and the section **37a** of the drain line **37** to the fluid reservoir **16a**. On the other hand, when the pressure at the inlet port **304** is lower than or equal to the relief pressure $P_{p0}$ then, the spring force of the set spring **342** overcomes the fluid pressure to establish contact between the mating shoulders **332** and **330** to block fluid communication between the control chamber **334** and the outlet port **306**.

On the other hand, when the pressure **Pi** at the inlet port **304** is lower than the pilot pressure $P_p$ in the pilot chamber **336**, the valve spool **318** is shifted toward the poppet valve **314** to contact with the latter at the tip end of the valve stem **334**. At this time, the force to depress the valve stem **334** onto the poppet valve **314** can be illustrated by $(P_p - Pi) \times A$. At this time, the pressure **Pi** introduced into the control chamber **334** via the inlet port **304** is canceled as an internal pressure. Therefore, the pressure balance at the poppet valve **314** can be illustrated by:

$$F_0 + kx = P_p \times A$$

where **k** is a spring coefficient of the set spring **342**;

and

x is a stroke of the poppet valve **314**.

From the balancing equations give hereabove, the operational check valve **300** becomes open when the pilot pressure $P_p$ is higher than the relief pressure $P_{p0}$ and is held at shut-off position while the pilot pressure is held lower than the relief pressure.

In the hydraulic circuit set forth above, the fluid is pump **16** is driven by the engine **200** to discharge pressurized working fluid while the engine is running. The pressurized fluid discharged from the outlet of the fluid pump **16** is fed to the pressure control valve **28** via the supply line **35** including the pressure regulating orifice **202** and the one-way check valve **204**.

When the pressure control valve **28** is shifted to establish fluid communication between the supply port **54s** and the pressure control port **54c** from the valve position shown in **Fig. 2**, the pressurized working fluid passes the pressure control valve **28** and introduced into the working chamber **26d** of the hydraulic cylinder **26**. On the other hand, when the pressure control valve **28** is shifted to block fluid communication between the supply port **54s** and the pressure control chamber **PC**, the fluid pressure in the supply line **35** increases. When the line pressure in the supply line **35** becomes higher than or equal to the set pressure of the pressure relief valve **206** in the pressure relief line **205**, the excessive pressure is fed to the drain line **37** via the pressure relief valve **206** and thus returned to the reservoir tank **16a**.

The fluid pressure in the supply line **35** is also fed to the operational one-way check valve **300** via a pilot line **208**. As set forth, the operational one-way check valve **300** is placed at open position as long as the pilot pressure introduced through the pilot line **300a** is held higher than or equal to the set pressure thereof. Therefore, fluid communication between the pressure control valve **28** and the reservoir tank **16a** is maintained. At this position, the working fluid is thus returned to the reservoir tank **16a** via the drain line **37** via the operational one-way check valve **300** and the oil cooler **211**.

The operational one-way check valve **300**, even at the open position, serves as a resistance to the fluid flow. Therefore, the fluid pressure in the drain line **37** upstream of the operational one-way check valve **300** becomes higher, i.e. higher than the offset pressure $P_0$. Then, the pressure relief valve **209** becomes active to open for allowing the excessive pressure of the working fluid to flow through the by-pass line **210**.

When the engine stops, the pressure unit **16** ceases operation. By stopping the pressure unit **16**, the working fluid pressure in the supply line **35** drops. According to drop of the pressure in the supply line **35**, the pilot pressure to be exerted to the operational one-way check valve **300** via the pilot line **300a** drops. When the pressure in the pilot line **300a** drops below or equal to the set pressure, the operational one-way check valve **300** is switched into operational one-way check position to block fluid communication therethrough. As a results, the fluid pressure in the drain line **37** upstream of the operational one-way check valve **300** becomes equal to the pressure in the working chamber **26d**. Therefore, even when the working fluid leaks through a gap between the spool valve **52** and the inner periphery of the valve bore, it is not affect the fluid pressure in the working chamber.

**Fig. 4** shows variation of the working fluid pressure in the working chamber **26d** of the hydraulic cylinder **26** according to variation of the current value of the control signal applied to the actuator **29** of the pressure control valve **28**. As seen from **Fig. 4**, the hydraulic pressure in the working chamber **26d** varies between a maximum pressure $P_{max}$ which is saturation pressure of the pressure source unit **16** and a minimum pressure $P_{min}$ which is set at a magnitude in view of a noise component to be contained in the control signal. As seen from **Fig. 4**, the maximum pressure $P_{max}$ corresponds to the maximum current value $I_{max}$ of the control signal and the minimum pressure $P_{min}$ corresponds to the minimum current value $I_{min}$ of the control signal. Furthermore, the hydraulic pressure level as labeled $P_N$ represents neutral pressure at the neutral current $I_N$. As seen, the neutral current $I_N$ is set at an intermediate value between the maximum and minimum current values $I_{max}$ and $I_{min}$.

Operation of the aforementioned pressure control valve **28** in terms of control of suspension characteristics and absorption of road shock will be discussed herebelow.

In general, the pressurized working fluid source unit **16** supplies the predetermined line pressure. For example, the line pressure in the supply line **35** may be set at a pressure of 80 kgf/cm$^2$.

When the vehicle steadily travels on a smooth straight road, the current value of the control signal to be applied to the actuator **29** of the pressure control valve **28** is maintained at the neutral value $I_N$. As long as the neutral value $I_N$ of the control signal is applied to the actuator **29**, the proportioning solenoid coil **68** is energized at a magnitude corresponding the neutral value $I_N$ of the control signal to place the poppet valve **48** at the corresponding position. At this position, the flow resistance at the communication path opening **46A**, path area of which is restricted by the valve head **48a** of the poppet valve **48** becomes the neutral value. At this position of the poppet valve **48**, the pilot pressure $P_p$ within the pilot chamber **PR** is maintained at the neutral pressure $P_N$. At this condition, if the fluid pressures is the control pressure **Pc** in the pressure control port **54c** is held equal to the fluid pressure in the working chamber **26d** of the hydraulic cylinder **26**, the fluid pressure in the upper and lower feedback chambers **FU** and **FL** are held in balance to each other. The valve spool **52** is maintained at the neutral position to shut fluid communication between the supply port **54s**, the drain port **54r** and the pressure control port **54c**. Therefore, the control pressure **Pc** is maintained at the neutral pressure $P_N$.

At this condition, when relatively high frequency and small magnitude road shock input through the vehicular wheel, is absorbed by fluid communication between the working chamber **26d** and the pressure accumulator **34** via the orifice **32**. The flow restriction in the orifice **32** serves to absorb the bounding and rebounding energy. Therefore, high frequency and small magnitude road shock can be effectively absorbed so as not to be transmitted to the vehicle body.

When the piston **26c** strokes in rebounding direction compressing the working chamber **26d**, the fluid pressure in the working chamber increases to increase the control pressure **Pc** in the pressure control port **54c**. Therefore, the control pressure **Pc** becomes higher than the pilot pressure **Pp** in the pilot chamber **PR**. This results in increasing of the fluid pressure in the lower feedback chamber **FL** at a magnitude higher than that in the upper feedback chamber **FU**. This causes upward movement of the valve spool **52** to establish fluid communication between the drain port **54r** and the pressure control port **54c**. Therefore, the pressure in the pressure control port **54c** is drained through the drain line **37**. This causes pressure drop at the pressure control port **54c** so that the control pressure **Pc** becomes lower than the pilot pressure **Pp** in the pilot chamber **PR**. Then, the fluid pressure in the upper feedback chamber **FU** becomes higher than that in the lower feedback chamber **FL**. Therefore, the valve spool **52** is shifted downwardly to establish fluid communication between the supply port **54s** and the pressure control port **54c**. The pressurized working fluid in the supply line **35** is thus supplied to the working chamber **26d** via the pressure control port **54c** to increase the fluid pressure. By repeating the foregoing cycles, pressure balance is established between the pressure control port **54c** and the pilot chamber **PR**. Therefore, the control pressure **Pc** as well as the fluid pressure in the working chamber **26d** are adjusted to the pilot pressure.

During the pressure adjusting operation set forth above, the fixed throttling orifice **Pro** serves for restricting fluid flow from the pressure control port **54c** to the drain line **37**. This flow restriction at the orifice **Pro** serves as resistance against the rebounding stroke of the piston **26c** to damp or absorb energy causing rebounding motion of the vehicle body. Furthermore, as set out, working fluid in the pilot chamber **PR** is generally introduced through the pilot path **PP** via the multi-stage orifice **Qp** and return through the pilot return path **PT** via the lower section **42UI** of the control chamber **42U** and via the multi-stage orifice **Pr**. As long as the fluid flow in the pilot return path **PT** is not disturbed and thus steady. The most upstream side orifice **Pr′** is mainly effective for restricting the fluid flow. Therefore, magnitude of flow restriction is relatively small so as to provide sufficient response characteristics in reduction of the pilot pressure. On the other hand, when the working fluid flowing from the control chamber **42U** confluence with the working fluid from the pilot chamber **PR**, back pressure is produced in the drain port **54r**, the fluid flowing through the pilot return path **PT** is disturbed and thus becomes unstable. This tends to cause serving of the pressurized fluid from the drain port **54r** to the pilot chamber **PR**. In such case, all of the orifices in the multi-stage orifice **Pr** is effective to create greater flow restriction that than for the steady flow. This avoid influence of the back pressure created in the drain port **54r**.

Similarly, in response to the bounding stroke of the piston **26c**, the valve spool **52** is shifted up and down to absorb bounding energy and maintains the fluid pressure in the working chamber **26d** of the hydraulic cylinder **26** at the neutral pressure.

On the other hand, when the anti-rolling suspension control is taken place in response to the lateral acceleration exerted on the vehicle body, the control signal current value is derived on the basis of the magnitude of the lateral acceleration monitored by the lateral acceleration sensor **23**. Generally, in order to suppress rolling motion of the vehicular body, the fluid pressure in the working chamber **26d** of the hydraulic cylinder **26** which is provided for the suspension mechanism at the side where the vehicular height is lowered across the neutral position, is increased to suppress lowering motion of the vehicle body. On the other hand, the fluid pressure in the working chamber **26d** of the hydraulic cylinder **26** which is provided for the suspension mechanism at the side where the vehicular height is risen across the neutral position, is decreased to suppress rising motion of the vehicle body. Therefore, in order to control the pressures in the working chambers **26d** of the both side hydraulic cylinders **26**, control signal current values are increased and creased across the neutral value $I_N$.

For example, when rolling motion is caused by left turn of the vehicle, control current for the actuators **29** of the pressure control valves **28** controlling the fluid pressures in the front-right and rear-right hydraulic cylinders **26FR** and **26RR** are to be increased to be greater than the neutral current $I_N$, and the control current for the actuator of the pressure control valves **28** controlling the fluid pressures in the front-left and rear-left hydraulic cylinders **26FL** and **26RL** are to be decreased to be smaller than the neutral current $I_N$. By the control current supplied to respective actuators **29**, the proportioning solenoid coils **68** are energized at the magnitudes corresponding to the control signal currents to place the poppet valves **48** at respective corresponding positions. By variation of the positions of the poppet valves **48**, flow restriction magnitude at respective communication path openings **46A** is varied to vary the pilot pressures **Pp** in the pilot chamber **PR**. As set forth, since the fluid pressures in the working chambers **26d** become equal to the pilot pressures **Pp**, the suspension characteristics at respective hydraulic cylinders **26** can be adjusted.

Anti-pitching, bouncing suppressive suspension control can be performed substantially in the same manner to that discussed with respect to the anti-rolling control.

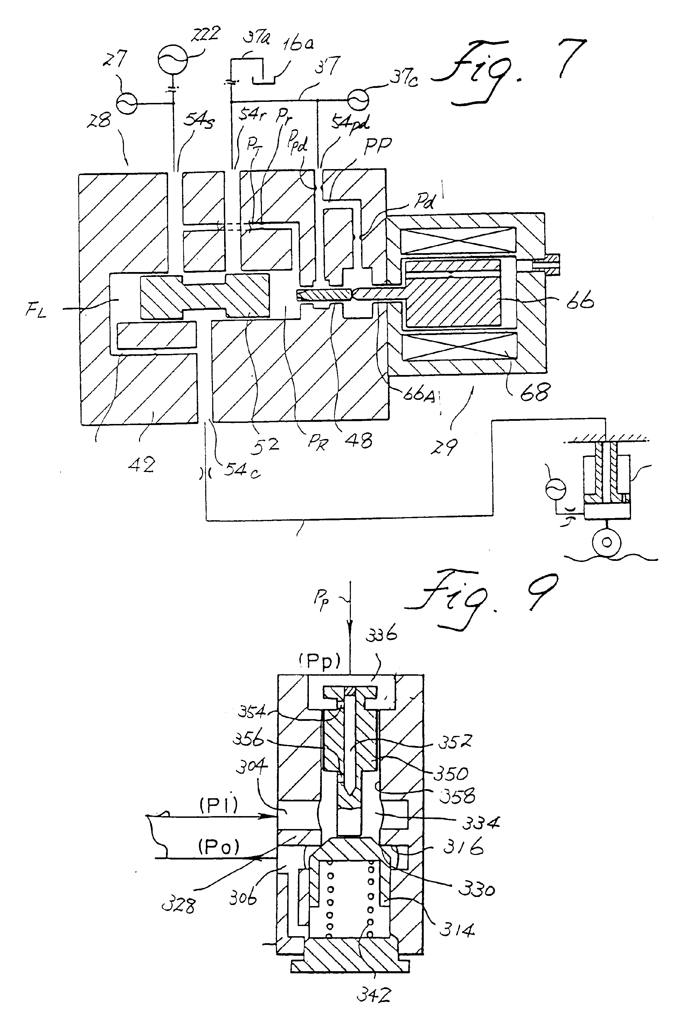

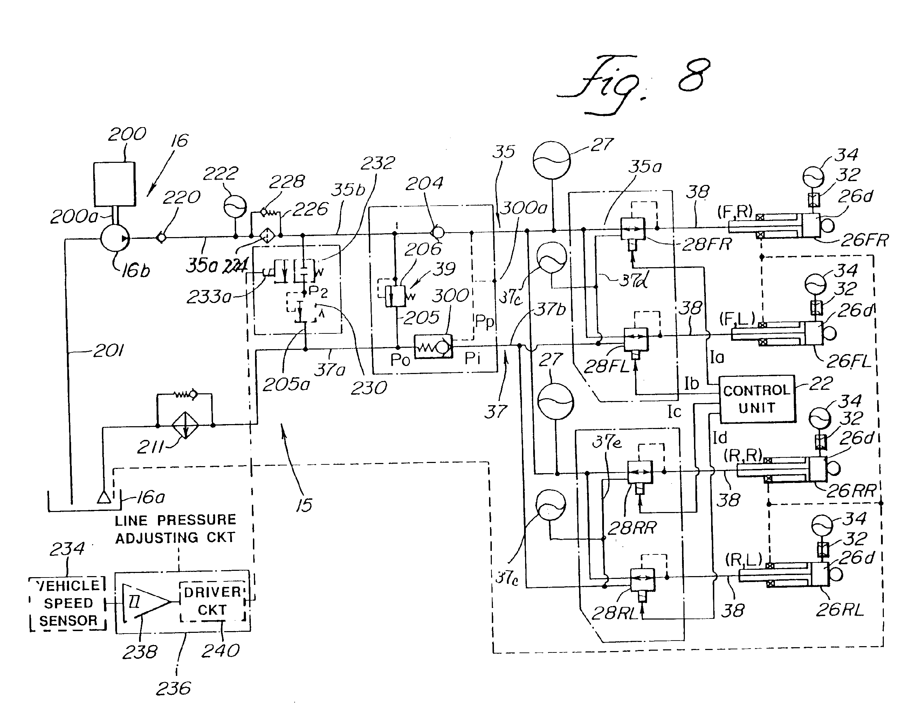

**Fig. 7** shows a modification of the pressure control valve unit **28** employed in the active suspension system according to the present invention. In this modification, the pilot path **PP** is connected to a path connecting the pressure accumulator **37c** to the drain line **37** via a pilot drain port **54pd** which has a flow restriction orifice **Ppd**. With this construction, substantially the same back pressure absorption can be obtained.

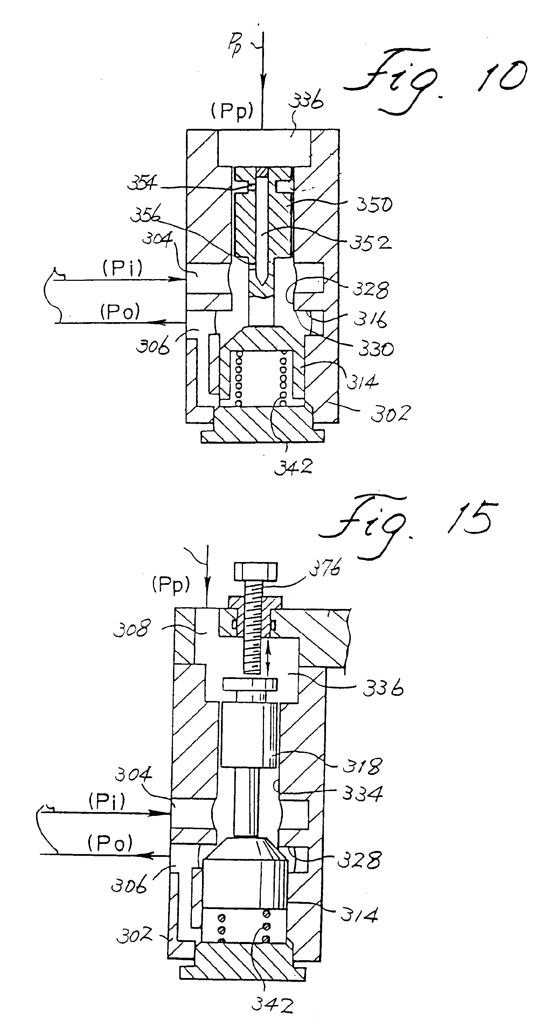

Fig. 8 shows a modification of the hydraulic circuit which is also applicable for the shown embodiment of the active suspension system, according to the present invention. Similarly to the foregoing circuit in **Fig. 3**, the hydraulic circuit includes a fluid pressure source circuit **15** which includes the pressure source unit **16**. The pressure source unit **16** includes the pressure unit **16b** which comprises a fluid pump, and is connected to a fluid reservoir **16a** via a suction pipe **201** The fluid pump **16b** is associated with an automotive engine **200** so as to be driven by the output torque of the latter output from an engine output shaft **200a**. The outlet of the pressure unit **16b**, through which the pressurized working fluid is discharged, is connected to the supply ports **54s** of the pressure control valves **28FL, 28FR, 28RL** and **28RR** respectively associated with the hydraulic cylinders **26FL, 26FR, 26RL** and **26RR**, via the supply line **35**. An one-way check valve **220**, a pressure accumulator **222** for absorbing pulsatile, a filter **224** are disposed in a portion **35b** of the supply line **35**. A by-pass passage **226** with an one-way check valve **228** is provided for by-passing the filter **224**. The supply line **35** has branch lines **35a** respectively connected to the supply ports **54s** of respectively corresponding pressure control valves **28FL, 28FR, 28RL** and **28RR**.

A high pressure accumulators **27** are also connected to the supply line **35** to receive therefrom the pressurized fluid for accumulating the pressure, which accumulator has large capacity and high set pressure, e.g. several tens kg/cm². An one-way check valve **204** is disposed in the supply line **35** at the position upstream of the junction between the high pressure accumulators **27** and the supply line **35**.

A pressure relief line **205** is also connected to the supply line **35** at the position intermediate between the filter **224** and the one-way check valve **204**, at one end. The other end of the pressure relief line **205** is connected to the drain line **37**. A pressure relief valve **206** is disposed in the pressure relief line **205**. The pressure relief valve **206** is responsive to the fluid pressure in the supply line **35** higher than a set pressure to drain the excessive pressure to the drain line for maintaining the pressure in the supply line **35** below the given first line pressure level.

It should be noted if desired, line pressure can be adjusted depending upon preselected vehicle driving parameter such as a vehicle speed. In case, the vehicle speed dependent variable line pressure is desired, another pressure relief valve **230** may be provided in parallel to the pressure relief valve **206** as shown by broken line in **Fig. 7**. The pressure relief valve **230** is disposed in an additional pressure relief line **205a** which extends parallel to the pressure relief line **205** and thus connected to the section **35a** of the supply line **35** in the fluid pressure source circuit **15** at the upstream end and to the section **37a** of the drain line **37** in the fluid pressure source circuit at the downstream end. An electromagnetic shut-off valve **232** is also provided in the pressure relief line **205a** at an orientation upstream of the pressure relief valve **230**. The pressure relief valve **205a** is provided lower set pressure than that of the pressure relief valve **206** so as to adjust the line pressure in the supply line **35** at a second line pressure level which is lower than the first line pressure level.

The electromagnetic shut-off valve **232** has an electromagnetic solenoid **232a** connected to a line pressure adjusting circuit **236** so that it may be operated in response to a line pressure control signal from the latter to switch valve position between an open position to establish fluid communication between the supply line **35** and the pressure relief valve **230** and a closed position to block fluid communication therebetween. The line pressure adjusting circuit **236** comprises a Schumitt trigger circuit **238** and a driver circuit **240**. The Schumitt trigger circuit **238** is connected to a vehicle speed sensor **234** which monitors vehicle speed to produce a vehicle traveling speed to produce a vehicle speed indicative signal **V**. The Schmitt trigger circuit **238** is designed to respond to a vehicle speed indicative signal value greater than a preset speed to output HIGH level signal and output LOW level signal otherwise. The driver circuit **240** is so designed as to output driver current to the solenoid **232a** of the electromagnetic shut-off valve **232** for energizing the solenoid to place the shut-off valve at open position when the output of the Schmitt trigger circuit **238** is held LOW level. The preset speed of the Schmitt trigger circuit **238** represents substantially low vehicle speed where adjustment of the fluid pressure in the working chamber **26d** of the hydraulic cylinder **26** is not required.

Therefore, while the vehicle is not running or is traveling at substantially low speed lower than the set speed, the pressure relief valve **230** becomes active to relief the pressure in excess of the second relief pressure. Therefore, the line pressure in the supply line **35** is lowered to reduce the load on the engine for driving the fluid pump **16a** can be reduced.

On the other hand, an operational one-way check valve **300** is disposed between sections **37a** and **37b** of the drain line **37**. The section **37b** of the drain line **37** forms two branches. As can be seen from **Fig. 7**, the drain ports **54r** of the pressure control valves **28FL** and **28FR** are connected to one of the branch of the section **37b** via a communication lines **37d**. For the communication line **37d**, a low pressure accumulator **37c** which has smaller capacity than the accumulator **27** and lower set pressure, e.g. several kg/cm², is connected. On the other hand, the drain ports **54r** of the pressure control valves **28RL** and **28RR** are connected to one of the branch of the section **37b** via a communication lines **37e**. For the communication line **37e**, a low pressure accumulator **37c** is connected. The operational one-way check valve **300** is also connected to the supply line **35** at downstream of the one-way check valve **204** to receive therefrom the pressure in the supply line as a pilot pressure, via a pilot line **208**. The operational one-way check valve **300** is designed to be maintained at open position as long as pilot pressure introduced from the supply line **35** at the orientation downstream of the one-way check valve **204** is held higher than a predetermined pressure. At the open position, the operational one-way check valve maintains fluid communication between the inlet side and outlet side thereof so that the working fluid in the drain line **37** may flow therethrough to the reservoir tank **16a**. On the other hand, the operational one-way check valve **300** is responsive to the working fluid pressure in the supply line downstream of the one-way check valve **204** serving as the pilot pressure dropping below the predetermined pressure level to be switched into shut-off position. At the shut-off position, the operational one-way check valve **300** blocks fluid communication between the drain port **54r** of the pressure control valve **28** and the reservoir tank **16a**. In the shown embodiment, the predetermined pressure is set at a pressure corresponding to the neutral pressure of the pressure control valve unit **28**.

An oil cooler **211** is disposed in the drain line **37** for cooling the working fluid returning to the reservoir tank **16a**.

In the shown construction, piping for drain line can be simplified by commonly using the sections **37b**. Also, by providing the low pressure accumulator in the communication lines **37d** and **37e**, back pressure in the drain line can be successfully absorbed. Also, the pressure accumulators **37c** are also active for absorbing interfering pressure between two pressure control valves commonly connected to single drain line **37b**.

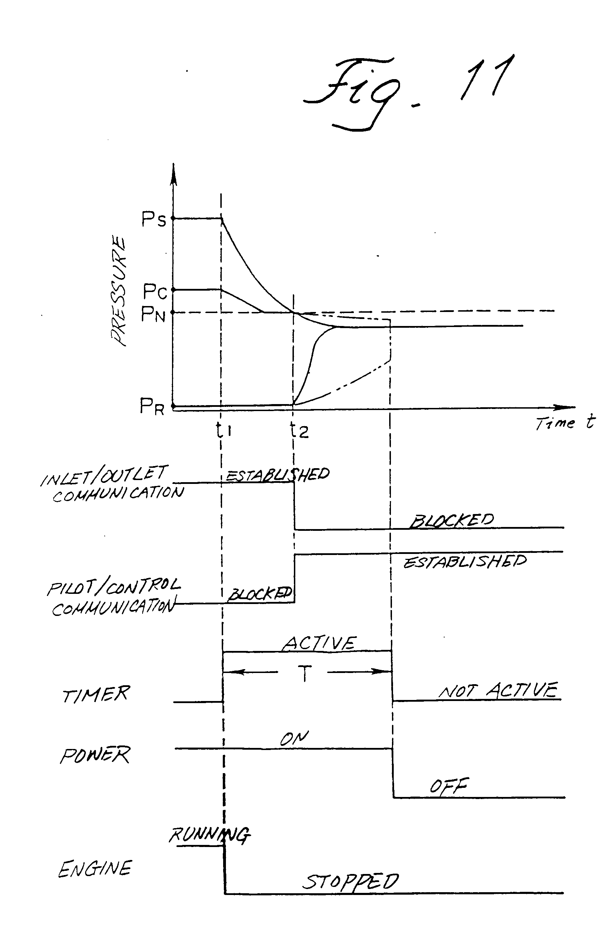

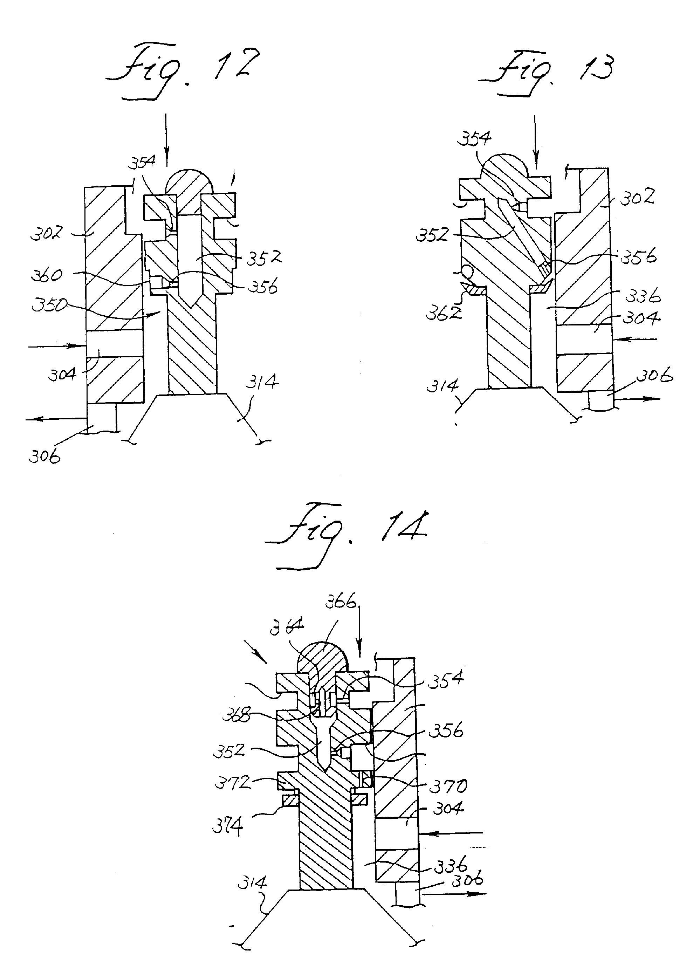

**Figs**. 9 and **10** show modifications of the operational one-way check valves **300** applicable for the preferred embodiment of the active suspension system according to the present invention. In the embodiment of **Fig. 9**, the valve spool **350** is formed of an axially extending bore **352** communicated with the pilot chamber **336** via a radially extending orifice **354** and with the control chamber **334** via a radially extending orifice **356**. As can be seen from **Fig.** 10, when the valve spool **350** is shifted to place the upper end in the drawings into the bore **358**, the orifice **354** is blocked from communication with the pilot chamber **336**. Therefore, with the shown construction, when the control chamber **334** is in communication with the outlet port **306** by shifting the poppet valve **314** away from the shoulder **330** of the land **328**, the fluid communication between the pilot chamber **336** and the control chamber **334** via the axial bore **352** and the orifices **354** and **356** can be blocked. On the other hand, when the poppet valve **314** is seated onto the shoulder **330** for blocking fluid communication between control chamber **334** and the outlet port **306**, the fluid communication between the pilot chamber **336** and the control chamber **334** can be established via the axial bore **352** and the orifices **354** and **356**.

In the preferred embodiment of the active suspension system, when an ignition switch is turned OFF at a time $t_1$, the engine stops running. Accordingly, the fluid pump **16b** is shut down. Therefore, line pressure supplied from the fluid pump **16b** becomes zero. At this time, the control unit **22** is maintained in active state for a predetermined period of time **T** by means of a timer. In the preferred embodiment, the predetermined period **T** is set at about 90 sec. The control unit **22** then maintain the control signal for respective pressure control valves **28FL, 28FR, 28RL** and **28RR** for commanding to supply neutral pressure to the control unit **22**. Then, the fluid pressure accumulated in the high pressure accumulator **27** is supplied to the pilot chamber **PR** via the inlet port **54s**, the pilot path **PP** and the drain port **54s** to establish the pilot pressure corresponding to the neutral value $I_N$ of the control signal in pilot chamber **PR**.

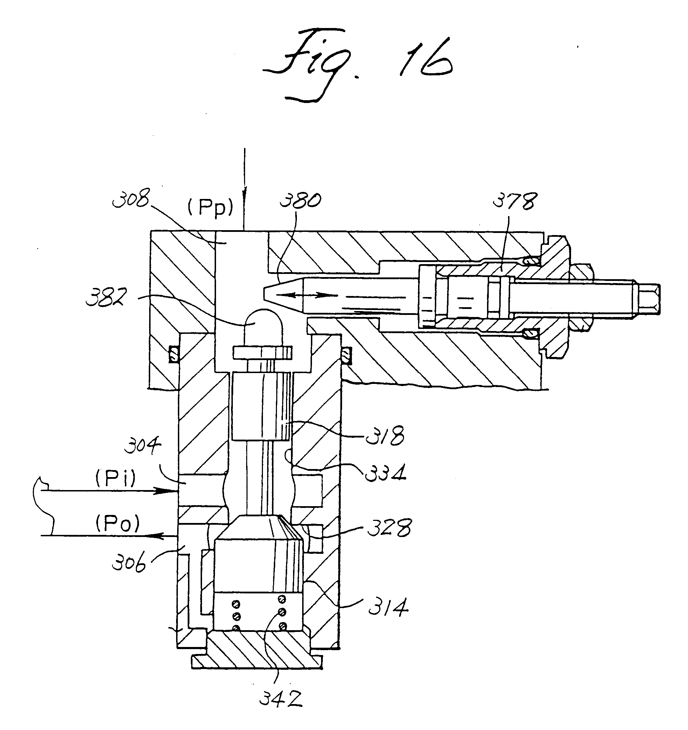

According to consumption of the accumulated pressure in the high pressure accumulator **27**, the supply pressure **Ps** is gradually lowered as shown in **Fig. 11**. When the supply pressure **Ps** drops at a relief pressure **Pp1** which corresponds to the neutral pressure $P_N$, the poppet valve **314** is shifted to the position of **Fig.** 9 for blocking fluid communication between the control chamber **334** and the outlet port **306**. Simultaneously, since the valve spool **350** is shifted upwardly as shown in **Fig. 9** to establish fluid communication between the pilot chamber **336** and the control chamber **334**, at a time $t_2$. At this position, since the control signal $I_N$ commanding the neutral pressure $P_N$ for the pressure control valves **28FL, 28FR, 28RL** and **28RR** is maintained, the pressurized fluid is accumulated in the section **37b** of the drain line **37**. At this time, the pilot pressure introduced into the pilot chamber **336** of the operational one-way check valve **300** is returned to the section **37b** via the bore **352** and orifices **354** and **356**. Therefore, the return pressure $P_R$ in the low pressure accumulators **37c** is rapidly increased as shown in **Fig. 11**.

After the predetermined period of time **T**, the control unit **22** is shut down. Therefore, the control signal value **I** becomes zero. By this, direct communication between the control port **54c** and the drain port **54r** is established in each of the pressure control valves **28FL, 28FR, 28RL** and **28RR**. However, the fluid pressure in the circuit upstream of the operational one-way check valve balances near the neutral pressure $P_N$, the fluid pressure in the working chamber can be maintained at constant value. This clearly enhance characteristics of building up the return pressure in the low pressure accumulator **37c** in response to ON set of power supply.

**Figs. 12** through **14** show various configurations of the fluid communication path for establishing fluid communication between the pilot chamber and the control chamber of the operational one-way check valve to be employed in the preferred embodiment of the active suspension system according to the present invention. These variation may also provide substantially the same performance to that of the former embodiment. In the construction of **Fig. 12**, a recess **360** is formed in addition to the construction of **Figs. 9** and **10**. This construction additionally provides noise elimination effect in comparison with that in the former embodiment. In the construction of **Fig. 13**, the bore **352** is formed in oblique to the axis of the valve spool **350**. Opposing to one end opening of the orifice, a skirt portion **362** is formed for bumping the fluid from the pilot chamber. This construction also effective for noise elimination. In the construction of **Fig. 14**, an annular groove **364** is formed on the outer periphery of a plug member **366** sealingly closing the open end of the bore **352**. The annular groove **364** is in communication with the axial bore **352** via a radially extending orifice **368**. Further orifice **370** is formed through a skirt portion **372**. Furthermore, a skirt section **374** is provided in opposition to the discharge end of the orifice **370**. With four stage orifice arrangement in **Fig. 14**, substantially high noise elimination effect can be obtained.

**Fig. 15** shows another modification of the operational one-way check valve. The valve construction per se is essentially the same as that of **Fig. 5**. In addition to this, the shown embodiment, employs a manually operable screw **376** for manually operating the poppet valve **314** via the valve spool **318** so that the fluid communication between the control chamber **334** and the outlet port **306** can be manually established. This mechanism is particularly effective for maintenance purpose. Namely, in order to perform, vacuum drawing or flushing, such function enabling to manually establishing fluid communication between the control chamber and the outlet port can be conveniently used. **Fig. 16** shows further modification of the mechanism for manually establishing fluid communication between the control chamber and the outlet port. In the shown construction, the manually operable screw **376** is replaced with a push pin **378** with a tapered head **380**. As can be seen from **Fig. 16**, the push pin **378** is laterally movable with respect to the valve spool **318**. The tapered end **380** of the push pin **378** is oriented to mate with a round head **382** of the valve spool **318**. With the shown construction, by shifting the push pin **378** toward the valve spool **318**, the tapered end **380** comes into contact and gradually shift the valve spool downwardly for establishing fluid communication between the control chamber **334** and the outlet port **306**.

With the various embodiments set forth above, enhancement of the hydraulic circuit in the active suspension system can be achieved.

While the present invention has been disclosed in terms of the preferred embodiment in order to facilitate better understanding of the invention, it should be appreciated that the invention can be embodied in various ways without departing from the principle of the invention. Therefore, the invention should be understood to include all possible embodiments and modifications to the shown embodiments which can be embodied without departing from the principle of the invention set out in the appended claims.

**Claims**

1. An actively controlled suspension system comprising:

   a hydraulic cylinder (26) disposed between a vehicle body (10) and a suspension member (24) rotatably supporting a vehicular wheel (11), said hydraulic cylinder (26) defining therein a working chamber (26d);

   a pressure source means (16) including a pump means (16b) associated with an automotive internal combustion engine (200) to be driven by the output of said engine (200);

   a pressure control valve means (28) having a first port (54c) connected to said working chamber (26d), a second port (54s) connected to said pressure source means (16) via a supply line (35) and a third port (54r) connected to said pressure source means (16) via a drain line (37), said pressure control valve means (28) being variable of valve position for selectively establishing and blocking fluid communication between said first port (54c) and said second port (54s) and between said first port (54c) and said third port (54r) for adjusting fluid pressure in said working chamber (26d) for controlling suspension characteristics;

   check valve means (300) disposed in said drain line (37) and connected to said supply line (35) for establishing fluid communication through said drain line (37) when a line pressure in said supply line (35) is held higher than or equal to a set pressure.

   characterised in that

   back pressure absorbing means (37c) are provided between said pressure control valve means (28) and said check valve means (300) to thereby absorb back pressure generated by flow resistance in said drain line.

2. An active suspension system as set forth in claim 1, wherein said back pressure absorbing means (37c) is provided between said pressure control valve means (28) and said check valve means (300).

3. An active suspension system as set forth in claim 2, wherein said back pressure absorbing means (37c) comprises a pressure accumulator.

4. An active suspension system as set forth in claims 1 or 2, wherein said check valve means comprises a pilot pressure operated operational one-way check valve (300), which has a pilot chamber (336) to which the line pressure in said supply line (35) is introduced for selectively establishing and blocking fluid communication through said drain line (37).

5. An active suspension system as set forth in claim 4, wherein said operational one-way check valve (300) defines an inlet port (304) connected to said pressure control valve (28) via a first section (37b) of said drain line (37) and an outlet port (306) connected to a fluid reservoir (16a) in said pressure source (16), said operational one-way check valve (300) further defining a communication path means for selectively establishing and blocking fluid communication between said pilot chamber (336) and said inlet port (304).

6. An active suspension system as set forth in claims 4 or 5, wherein said operational one-way check valve (300) includes a valve member (314, 318) movable between a first position for establishing fluid communication between said inlet (304) and outlet ports (306) of said check valve and a second position for blocking fluid communication between said inlet (304) and outlet ports (306) of said check valve, and said fluid communication path means establishes fluid communication between said pilot chamber (336) and said inlet port (304) when said valve member is in said second position and blocks fluid communication between said pilot chamber (336) and said inlet port (304) when said valve member is in said first position.

7. An active suspension system as set forth in one of claims 1 to 6, which further comprises a control unit (22) associated with at least one sensor (23a, 25) for monitoring preselected vehicle driving parameter, said control unit (22) deriving a control signal for said pressure control valve means (28) for operating the latter in a magnitude corresponding thereto, said control unit (22) maintains operation for a given period of time after shutting down of main power supply.

**Patentansprüche**

1. Aktiv gesteuertes Aufhängungssystem mit
   - einem Hydraulikzylinder (26) zwischen einem Fahrzeugaufbau (10) und einem Aufhängungsglied (24), das drehbar ein Fahrzeugrad (11) trägt, welcher hydraulische Zylinder (26) im Inneren eine Arbeitskammer (26d) bildet,
   - einer Druckquelle (16) mit einer Pumpe (16b), die einer Kraftfahrzeug-Brennkraftmaschine (200) zugeordnet ist und durch die Ausgangsleistung der Maschine (200) angetrieben werden kann,
   - einem Drucksteuerventil (28) mit einem ersten Eingang (54c) in Verbindung mit der Arbeitskammer (26d), einem zweiten Eingang (54s) in Verbindung mit der Druckfluidquelle (16) über eine Versorgungsleitung (35) und einem dritten Eingang (54r) in Verbindung mit der Druckfluidquelle (16) über eine Rücklaufleitung (37), welches Drucksteuerventil (28) eine veränderliche Ventilposition zur selektiven Herstellung und Unterbrechung einer Fluidverbindung zwischen dem ersten Eingang (54c) und dem zweiten Eingang (54s) und zwischen dem ersten Eingang (54c) und dem dritten Eingang (54r) zur Einstellung des Fluiddrucks in der Arbeitskammer (26d) zur Steuerung der Aufhängungscharakteristika aufweist,
   - einem Rückschlagventil (300) in der Rücklaufleitung (37), das mit der Zufuhrleitung (35) verbunden ist und eine Fluidverbindung durch die Rücklaufleitung (37) herstellt, wenn ein Leitungsdruck in der Versorgungsleitung (35) höher als oder gleich einem vorgegebenen Druck ist,

dadurch **gekennzeichnet,** daß eine Gegendruck-Aufnahmeinrichtung (37c) zwischen dem Drucksteuerventil (28) und dem Rückschlagventil (300) vorgesehen ist, die den Gegendruck aufnimmt, der durch Strömungswiderstand in der Rücklaufleitung entsteht.

2. Aktives Aufhängungssystem nach Anspruch 1, bei dem die Einrichtung (37c) zum Aufnehmen von Gegendruck zwischen dem Drucksteuerventil (28) und dem Rückschlagventil (300) angeordnet ist.

3. Aktives Aufhängungssystem nach Anspruch 2, bei dem die Einrichtung (37c) zum Aufnehmen von Gegendruck einen Druckspeicher umfaßt.

4. Aktives Aufhängungssystem nach Anspruch 1 oder 2, bei dem das Rückschlagventil ein steuerdruck-betätigtes Einweg-Rückschlagventil (300) umfaßt, das eine Steuerkammer (336) aufweist, in die der Leitungsdruck der Versorgungsleitung (35) zur selektiven Herstellung und Unterbrechung einer Fluidverbindung durch die Rücklaufleitung (37) hindurch eingeleitet wird.

5. Aktives Aufhängungssystem nach Anspruch 4, bei dem das Einweg-Rückschlagventil (300) einen Einlaß (304) in Verbindung mit dem Drucksteuerventil (28) über einen ersten Abschnitt (37b) der Rücklaufleitung (37) und einen Auslaß (306) in Verbindung mit einem Fluidbehälter (16a) in der Druckquelle (16) umfaßt, welches Einweg-Rückschlagventil (300) weiterhin eine Verbindungsbahn zur selektiven Herstellung und Unterbrechung einer Fluidverbindung der Steuerkammer (336) um dem Einlaß (304) umfaßt.

6. Aktives Aufhängungssystem nach Anspruch 4 oder 5, bei dem das gesteuerte Einweg-Rückschlagventil (300) ein Ventilglied (314,318) umfaßt, das beweglich ist zwischen einer ersten Position zur Herstellung einer Fluidverbindung zwischen dem Einlaß (304) und Auslässen (306) des Rückschlagventils und einer zweiten Position zur Blockierung der Fluidverbindung zwischen dem Einlaß (304) und den Auslässen (306) des Rückschlagventils, wobei eine Fluidverbindungsbahn eine Verbindung herstellt zwischen der Steuerkammer (336) und dem Einlaß (304), wenn das Ventilglied in der zweiten Position ist, und die Fluidverbindung zwischen der Steuerkammer (336) und dem Einlaß (304) unterbricht, wenn der Ventilkörper in der ersten Position steht.

7. Aktives Aufhängungssystem nach einem der Ansprüche 1 bis 6, mit einer Steuereinheit (22) in Verbindung mit wenigstens einem Sensor (23a,25) zur Überwachung vorgegebener Fahrtparameter des Fahrzeugs, welche Steuereinheit (22) ein Steuersignal für das Drucksteuerventil (28) zu dessen Betätigung ableitet in einer Größe, die diesem entspricht, welche Steuereinheit (22) den Betrieb für eine gegebene Zeitperiode nach dem Schließen der Hauptstromzufuhr aufrechterhält.

**Revendications**

1. Système de suspension à contrôle actif, comprenant : un cylindre hydraulique (26) disposé entre une caisse de véhicule (10) et un élément de suspension (24) supportant en rotation une roue du véhicule (11), ce cylindre hydraulique (26) définissant une chambre de travail (26d) dans celui-ci ;
des moyens formant source de pression (16) comprenant des moyens formant pompe (16b) associés à un moteur à combustion interne de l'automobile (200), pour être entraînés par la sortie de ce moteur (200) ;
des moyens formant soupape de contrôle de la pression (28) avec une première lumière (54c), connectée à ladite chambre de travail (26d), une seconde lumière (54s) connectée aux moyens formant source de pression (16) via une ligne d'alimentation (35), ainsi qu'une troisième lumière (54r) connectée auxdits moyens formant source de pression (16) via une ligne de drainage (37), lesdits moyens formant soupape de contrôle de la pression (28) pouvant changer de position de soupape pour établir, de manière sélective et bloquer la communication de fluide entre ladite première lumière (54c) et ladite seconde lumière (54s), ainsi qu'entre la première lumière (54c) et ladite troisième lumière (54r) pour ajuster la pression de fluide dans la chambre de travail (26d) afin de contrôler les caractéristiques de la suspension ;
des moyens formant soupape de vérification (300) disposés dans ladite ligne de drainage (37) et connectés à ladite ligne d'alimentation (35) pour établir une communication de fluide au travers de ladite ligne de drainage (37) quand la pression en ligne dans la ligne d'alimentation (35) est maintenue au-dessus ou est égale à une température choisie,
caractérisé en ce que des moyens d'absorption de pression en retour (37c) sont prévus entre lesdits moyens formant soupape de contrôle de la pression (28) et lesdits moyens formant soupape de vérification (300) pour absorber ainsi les pressions en retour générées par la résistance à l'écoulement à l'intérieur de ladite ligne de drainage.

2. Système de suspension actif selon la revendication 1, dans lequel les moyens d'absorption de la pression en retour (37c) sont prévus entre les moyens formant soupape de contrôle de la pression (28) et lesdits moyens formant soupape de vérification (300).

3. Système de suspension actif selon la revendication 2, dans lequel les moyens d'absorption de la pression en retour (37c) comprennent un accumulateur de pression.

4. Système de suspension actif selon la revendication 1 ou 2, dans lequel les moyens formant soupape de vérification comprennent une pression pilote actionnée par une soupape de vérification opérationnelle à une voie (300), qui possède une chambre de pilotage (336) vers laquelle la pression en ligne dans la ligne d'alimentation (35), est introduite pour sélectivement établir et bloquer une communication de fluide au travers de la ligne de drainage (37).

5. Système de suspension actif selon la revendication 4, dans lequel lesdits moyens formant soupape de vérification opérationnelle à une voie (300) définissent une lumière d'admission (304) connectée à ladite soupape de contrôle de la pression (28), via une première section (37b) de ladite ligne de drainage (37), ainsi qu'une lumière de sortie (306) connectée à un réservoir de fluide (16a) dans ladite source de pression (16), lesdits moyens formant soupape de vérification opérationnelle à une voie (300) définissant en outre des moyens formant voie de communication aptes à établir sélectivement et à bloquer la communication entre ladite chambre pilote (336) et ladite lumière d'admission (304).

6. Système de suspension actif selon la revendication 4 ou 5, dans lequel la soupape de vérification opérationnelle à une voie (300) comprend un élément de soupape mobile entre une première position permettant d'établir une communication de fluide entre ladite admission (304) et ladite lumière de sortie (306) de la soupape de vérification et une seconde position permettant de bloquer la communication de fluide entre ladite admission (304) et la lumière de sortie (306) de la soupape de vérification, et lesdits moyens formant voie de communication de fluide établissant une communication de fluide entre la chambre de pilotage (336) et ladite lumière d'admission (304) quand cet élément de soupape est dans sa seconde position et bloque la communication de fluide entre la chambre de pilotage (336) et ladite lumière d'admission (304) quand l'élément de soupape est dans sa première position.

7. Système de suspension actif selon l'une des revendications 1 à 6, qui comprend en outre une unité de contrôle (22) associée avec au moins un détecteur (23a, 25) apte à contrôler des paramètres de conduite présélectionnés du véhicule, cette unité de contrôle (22) dérivant un signal de contrôle pour les moyens formant soupape de contrôle de la pression (28) afin de faire fonctionner cette dernière suivant une amplitude correspondant à celui-ci, ladite unité de contrôle (22) maintenant le fonctionnement pour une période donnée de temps après la coupure de l'alimentation en puissance principale.

Fig. 1

Fig. 2

Fig. 3

# Fig. 4

# Fig. 5

# Fig. 6

PRESSURE IN HYDRAULIC CYLINDER

BACK PRESSURE

20

EP 0 414 984 B1

Fig. 7

Fig. 9

21

Fig. 8

*Fig. 10*

*Fig. 15*

*Fig. 11*

Fig. 12

Fig. 13

Fig. 14

Fig. 16